(19)

Europäisches
Patentamt

European
Patent Office

Office européen
des brevets

(11) **EP 2 887 293 A1**

(12) **EUROPEAN PATENT APPLICATION**

(43) Date of publication:
**24.06.2015 Bulletin 2015/26**

(51) Int Cl.:
***G06Q 30/02*** *(2012.01)*

(21) Application number: **13290328.7**

(22) Date of filing: **23.12.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Amadeus S.A.S.
06410 Biot (FR)**

(72) Inventors:
• **Hasnas, Sergiu
06700 St Laurent du Var (FR)**

• **Singer, Joel
06650 Le Rouret (FR)**
• **Ossola, Baptiste
06600 Antibes (FR)**
• **Kuhn, Gilles
06600 Antibes (FR)**

(74) Representative: **Samson & Partner Patentanwälte
mbB
Widenmayerstraße 6
80538 München (DE)**

(54) **Revenue driven travel rewards**

(57)    A method, apparatus and program product utilize a revenue driven approach for determining a travel loyalty reward. Both the availability and fare for a travel loyalty award may be determined dynamically based on inventory and revenue data. By doing so, travel loyalty awards may utilize inventory management and revenue management techniques to improve both the revenue realized from travel loyalty programs and customer satisfaction.

FIG. 1

EP 2 887 293 A1

## Description

### Field of the Invention

Embodiments of the invention relate generally to loyalty rewards in the travel and tourism industry and data processing systems for determining same.

### Background of the Invention

In order to optimize revenue, the airline industry faces a number of complex issues directed toward balancing the demand from customers and the supply in terms of the airlines' respective capacities for transporting passengers. Most bookings of passengers on flights are made either on an individual basis, e.g., via individual bookings for individual passengers or small groups of passengers, or on a group basis, where reservations are made to accommodate a relatively large party of passengers, e.g., school groups, church groups, tour groups, etc. desiring travel to the same destination. These individual and group bookings will be referred to hereinafter as standard bookings.

Another issue faced by airlines and other travel providers is maximizing the utility of their loyalty programs, e.g., frequent flyer programs and the like, which have been found to be important for marketing and customer relationship management. Conventional airline loyalty programs have generally been based on miles (or award/status points) given to members based on their past purchases. Such programs have conventionally required advanced systems to track members' purchases and miles. In some instances, customer behavior is analyzed in order to push offers to customers and increase their purchases. Some airline loyalty programs also implement program tiers that rank users according to numbers of status points, offering heavier users the possibility of earning additional miles and providing easier access to various ancillary services (e.g., lounge, priority boarding, etc.).

Conventional loyalty programs generally have a number of benefits, including increasing existing customer loyalty and attracting new customers, providing access to information about members and member trends, increasing average sales (e.g., by offering mileage programs only on selected flights, upselling by offering services/goods for the miles, etc.), and providing an ability to target specific consumer segments.

The successful application of loyalty programs has led to increases in the numbers of participating customers. Many customers earn a substantial number of miles that can have a very long or infinite validity due to the competition between airlines and their desire to make their loyalty programs more and more attractive. As a result, the amount of current liabilities among frequent flyer programs in the industry is substantial. This is a source of assets for airlines but is also a concern for the loyalty managers who must make sure that the liabilities are under control and are consumed by the customers.

Conventionally, many travel loyalty programs implement miles redemption through redemption availability and classes. The redemption availability, however, is generally kept low to ensure that sufficient availability is available for standard bookings. Redemption fares are generally either calculated from separate redemption published fares, or directly from airline loyalty systems, e.g., based on a miles to currency conversion process. Nonetheless, traditional travel loyalty awards are generally treated as separate from standard travel products, and often do not take into account many of the criteria, such as maximizing revenue and minimizing unused capacity, that are used when offering standard travel products to customers.

Consequently, a significant need continues to exist in the art for an improved and more automated manner of determining travel loyalty rewards.

### Summary of the Invention

The invention addresses these and other problems associated with the prior art by providing in one aspect a method, apparatus and program product that utilize a revenue driven approach for determining a travel loyalty reward. Both the availability and fare for a travel loyalty award may be determined dynamically based on inventory data, revenue data, and in some embodiments, customer loyalty data. By doing so, travel loyalty awards may utilize inventory management and revenue management techniques as well as customer loyalty management techniques to improve both the revenue realized from travel loyalty programs and customer satisfaction. Customer satisfaction may be attained both by the flexibility offered in the award booking process and by the personalization of the net fares according to the individual loyalty member characteristics.

Therefore, consistent with one aspect of the invention, a travel loyalty award is determined by, in response to receiving a request for a travel loyalty award including at least one travel inventory item, accessing inventory and revenue data for the at least one travel inventory item, dynamically determining availability of the travel loyalty award based at least in part on the accessed inventory data, and dynamically generating a fare for the travel loyalty award based at least in part on the accessed revenue data.

These and other advantages and features, which characterize the invention, are set forth in the claims annexed hereto and forming a further part hereof. However, for a better understanding of the invention, and of the advantages and objectives attained through its use, reference should be made to the Drawings, and to the accompanying descriptive matter, in which there is described example embodiments of the invention.

**Brief Description of the Drawings**

FIGURE 1 is a block diagram of a computer system configured to implement a revenue driven travel loyalty reward determination operation consistent with the invention.

FIGURE 2 is a block diagram of an example implementation of a computer capable of implementing at least a portion of the computer system referenced in Fig. 1.

FIGURE 3 is a flowchart illustrating an example sequence of steps performed by an award calculator process when performing a revenue driven travel loyalty reward determination operation in the system of Fig. 1.

**Detailed Description**

Embodiments consistent with the invention utilize a revenue-driven approach for determining a travel loyalty award, such that both availability and a fare for the travel loyalty award are dynamically generated based on inventory and revenue data, e.g., current or real-time inventory and revenue data accessible through inventory and revenue management systems. A travel loyalty award, in this regard, may include any number of different types of travel products, including, for example, awards for air travel, hotels, car rental, taxis, rail travel, cruises, ferries, entertainment, etc., as well as various ancillary services such as meals, upgrades, baggage allocations, etc. A travel loyalty award may also include combinations of such travel products, e.g., a travel package including both air travel and a stay at a resort. Travel loyalty awards are generally offered in connection with a travel loyalty program such as a frequent flyer program (FPP), and are generally based on miles/points accumulation based on purchases, allowing later redemption and service based recognition.

In addition, travel products may be referred to herein as travel inventory items, representing travel-related goods and/or services for which inventory data is maintained and capable of being accessed. For example, for air travel, travel inventory items may include flight segments that are capable of being purchased alone or in combination with other flight segments for the purpose of traveling between an origin and one or more destinations.

In embodiments consistent with the invention, a travel loyalty award is determined by, in response to receiving a request for a travel loyalty award including at least one travel inventory item, accessing inventory and revenue data for the at least one travel inventory item, dynamically determining availability of the travel loyalty award based at least in part on the accessed inventory data, and dynamically generating a fare for the travel loyalty award based at least in part on the accessed revenue data. The inventory data may be accessed, for example, from an inventory system, and in some embodiments, may be based on inventory data for commercial travel inventory items. In addition, the revenue data may be accessed, for example, from a revenue management system, and in some embodiments, may be based on revenue data for commercial travel inventory items.

Furthermore, in some embodiments, the availability for a travel loyalty award may be based on availability in at least one product type associated with the travel inventory item (e.g., for a flight, a cabin), or based on availability for the travel inventory item, capacity for the travel inventory item, and existing bookings for the travel inventory item. The availability may be determined in some embodiments based upon a maximum proportion of awards that may be booked in at least one cabin associated with the travel inventory item, and in some embodiments, may include applying at least one business rule that is based on at least one of departure date, departure market, arrival market, travel vehicle/service type, travel vehicle cabin/product type, current/expected car stock usage rate, current/expected entertainment item usage rate, current/expected load factor, etc.

In some embodiments, the availability may be determined in part by determining an availability count for at least one travel inventory item. Availability at a request level may be determined in some embodiments as a minimum of determined availability counts for a plurality of travel inventory items associated with the travel loyalty award.

Additionally, in some embodiments, a fare may be dynamically generated based at least in part on an expected unused capacity at a time of departure for a travel product or travel vehicle (e.g., an airplane) associated with the travel loyalty award. In some embodiments, the fare may be determined by generating a fare for each of a plurality of travel inventory items and summing the fares for the plurality of travel inventory items. A fare may also be based at least in part on loyalty data for a customer associated with the travel loyalty award.

Displacement cost may also be used in some embodiments to generate a fare. In particular, a displacement cost may be determined from revenue data, and may be associated with an opportunity cost for allocating the travel inventory item to the travel loyalty award instead of to a standard booking. In some embodiments, the revenue data may include yield data, and determining the displacement cost may include determining the displacement cost for at least one booking class among a plurality of booking classes based upon the yield data. In other embodiments, the revenue data may include bid price data, and determining the displacement cost may include determining the displacement cost based upon the bid price data.

The displacement cost may be adjusted in some embodiments by applying at least one business rule that is based on at least one of departure date, departure market, arrival market, travel vehicle cabin, travel product type, point of commencement, point of sale, current load factor, or expected load factor. In addition, a minimum revenue constraint may be applied in some embodiments based upon at least one business rule that is based on at least one of departure date, departure market, arrival market, travel product type, or travel vehicle cabin.

A fare may be customized in some embodiments based on loyalty data associated with a customer associated with the travel loyalty reward, e.g., by accessing the loyalty data from one of a customer relationship management system, a loyalty program system, a frequent flyer program system, or a customer experience management system. In some embodiments, a business rule may be used to customize the fare, based on at least one of customer tier, customer value, customer churn risk, customer ancillary revenues, customer disruption, customer miles breakage, request date or travel vehicle cabin. In some embodiments, the business rule may be based on a customer value determined using a Recency-Frequency-Monetary (RFM) or Customer Lifetime Value (CLV) algorithm. In still other embodiments, a fare may be customized based on a manually entered fare.

Fares may also be converted between currency-based values and points-based values in some embodiments of the invention. A currency-based value may take the form of a currency such as dollars, Euros, etc., while a points-based value may take the form of frequent flier miles, loyalty points, or another form understood in the art.

For the purpose of simplifying the discussion, the focus hereinafter will be on an implementation of the invention in connection with airline loyalty programs and travel loyalty awards taking the form of air travel awards, such that a travel provider is typically an airline or air carrier. It will be appreciated, however, that the invention may also be utilized in connection with other applications in the travel industry where travel loyalty awards may be desired. Therefore, the invention is not limited to the particular air travel implementation discussed hereinafter.

Certain terms used in the following description, and defined within the context of an air travel application of the invention, are defined as follows:

Travel inventory item: a unit or item from the saleable inventory of a travel provider. For an airline, a travel inventory item may be referred to as a seat, but it is typically not associated with any particular physical location on an airplane (e.g., seatA17).

Segment: a leg or a group of consecutive legs from a boarding point to the off point on a given flight (i.e. same flight number). A segment may be mono leg or multi-leg.

Leg: the space between two consecutive scheduled stops on any given flight, i.e., a physical transfer of an aircraft from an airport to another.

Cabin: Physical section of a transport apparatus (aircraft, train, bus, boat, etc.) usually for isolating different types of on-board services (e.g., first, business, economy).

Booking Class: a marketing segmentation used for reservation control (typically related to expected revenue). Traditionally a booking class gathers bookings made for the same kind of product (e.g., 14 days advance purchase booking, non-refundable bookings, etc.), and is designated by a one letter code.

Carrying cost: An airline cost associated with servicing a passenger. In the context of the present invention, this value may be defined at the segment/cabin level and may be used as a displacement cost when a passenger is accepted in a forecasted empty seat.

Yield: a value typically defined for each booking class of a given segment. The yield is an estimation of how much revenue the carrier (e.g., airline) receives from a sale in the associated booking class and segment.

Bid price/bid price vector: a net value (bid price) for an incremental seat, spot or place (hereinafter, an inventory item) on a particular flight/leg/cabin in an airline network. The bid price is the marginal value of a given flight/cabin/leg, also referred to as minimum acceptable net revenue, hurdle price, shadow price or dual cost. The bid price is typically the minimum revenue at which an airline wishes to sell the inventory item, and is typically provided as a list of pairs <bid price value, item index> meaning that for selling the next remaining inventory item equal to the item index value, the minimum revenue of the bid price value is expected. The current item index corresponds to the number of remaining inventory items for a given leg and cabin at a given time.

Leg/cabin capacity: the total number or quantity of saleable inventory items in a cabin for a given leg. It includes the inventory items already sold.

Leg/cabin availability: the amount of remaining places that can be sold on a given leg and cabin at a given time by taking into account the bookings already made.

Segment/cabin capacity: the minimum of the leg/cabin capacities of the legs included in the segment and for a given cabin.

Segment/cabin availability: the minimum of the leg/cabin availabilities of the legs included in the segment and for a given cabin.

Segment class availability: the number of seats that can be sold on a segment for a given class.

Forecasted empty seats: an amount of seats per cabin forecasted as empty at departure time and for which a revenue management system does not expect revenue.

Expected to Board Counter: the expected to board counter may be stored at leg-cabin level and may be calculated in some embodiments as the number of booked passengers with an overbooking factor applied, plus the number of future expected forecasted bookings.

Expected load factor: the expected load factor may be calculated at the leg/cabin level as the ratio between the expected to board counter and the cabin capacity in percentage. The expected load factor at segment cabin level may be calculated as the maximum of the expected load factors of the included leg cabins.

Load factor: the load factor may be calculated at leg/cabin level as the ratio between the number of confirmed bookings and the cabin capacity in percentage. The load factor at segment cabin level may be calculated as the maximum of the load factors of the included leg cabins.

Revenue management system: a computerized system that attempts to optimize revenues through continual monitoring of passenger demand, market trends and pricing activity, providing optimum inventory allocation. The revenue management system provides data such as yields, bid price, expected to board etc.

Inventory system: a computerized system that includes flight inventories with information on different capacities, reservations, availabilities etc. It also defines the cabins and booking classes.

Reservation system: a computerized system including information about schedules, availability, fares and related services, and through which reservations can be made and/or tickets issued, and which makes some or all of these facilities available to subscribers. May be used by airlines and travel agencies in order to make reservations on flights, hotels, car rentals, etc.

Other variations and modifications will be apparent to one of ordinary skill in the art.

Hardware and Software Environment

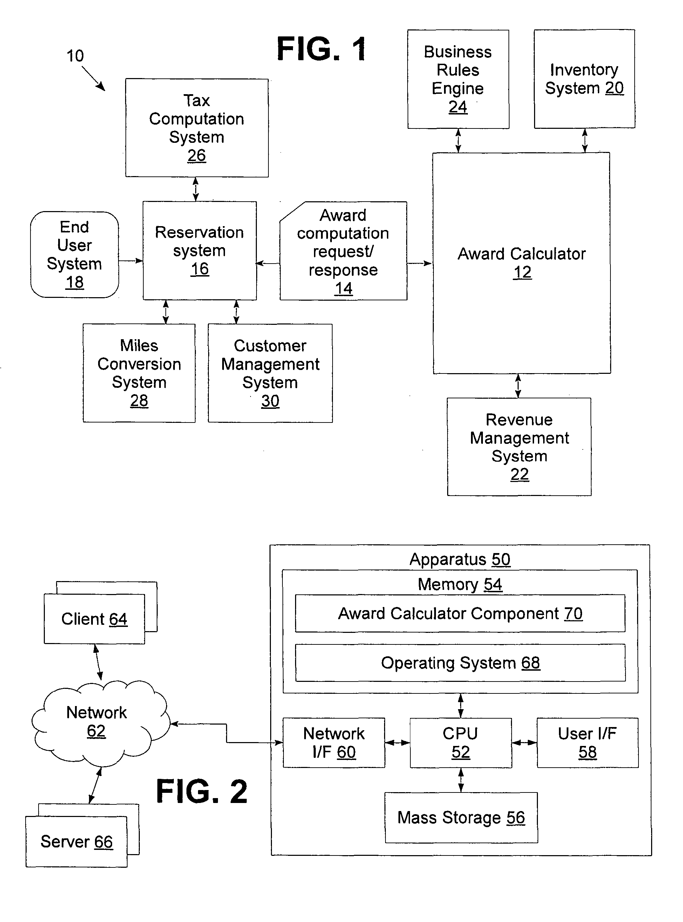

Turning now to the drawings, wherein like numbers denote like parts throughout the several views, Fig. 1 illustrates an example data processing system 10 in which a revenue driven travel loyalty reward determination operation may be implemented. System 10 is illustrated as including a central service implemented by an award calculator computer system 12, which is configured to exchange award computation requests and responses 14 with a reservation system 16, e.g., in response to queries initiated by an end user via an end user system 18. Award calculator computer system 12 may be interfaced with various additional travel-related computer services, e.g., an inventory system 20, a revenue management system 22 and a business rules engine 24. Inventory system 20 primarily provides flight inventory information such as capacity, availability and flight structure (cabins, booking classes, legs) of the flights that are present in the database, and revenue management system 22 provides revenue data such as bid price values and/or yield values that may be utilized to dynamically generate fares for travel loyalty awards. Business rules engine 24 provides and manages the business rules that enable a revenue driven travel loyalty reward determination operation to be customized for a particular travel provider.

In the illustrated embodiments, inventory system 20 and revenue management system 22 are not dedicated to award calculations, and as such, are utilized for standard bookings, such as individual and/or group bookings. As such, the flight inventory information in inventory system 20 may be considered to incorporate inventory data for various commercial travel inventory items, while revenue management system 22 may be considered to incorporate revenue data for calculating fares for commercial travel inventory items.

Reservation system 16 submits award computation requests to computer system 12 and receives responses therefrom. For example, reservation system 16 may issue requests to determine availability and a fare for one or more travel loyalty awards in response to an end user performing a search in the reservation system to book a travel loyalty award. In one example embodiment, an end user may perform a search for air travel between an origin and a destination on particular dates, and receive back a list of matching flights having suitable availability for booking a travel loyalty award, with the displayed fares for such flights generated in the manner discussed herein.

Reservation system 16, in addition to accessing computer system 12, may also have access to additional systems, such as a tax computation system 26, a miles conversion system 28 and a customer management system 30. Tax computation system 26 is used to determine the taxes to charge for particular net fares, while miles conversion system 28 converts between miles or other points-based values and currency, as per a particular travel provider's travel loyalty program. Customer management system 30 tracks and analyzes a customer's interaction history with a travel provider, and may include, for example, a Customer Relationship Management (CRM) component, a travel loyalty program component, a frequent flyer program management component, a Customer Experience Management (CEM) component and/or a customer data warehouse component, among other functionality. In some embodiments, requests to system 12 may be initiated through customer management system 30, e.g., in response to a customer interacting with a frequent flier website.

It will be appreciated that systems 12, 14, 16, 20, 22, 24, 26, 28 and/or 30 may be combined in some implementations and may be implemented within the same or in different computer systems. Moreover, these various systems may be operated and/or managed by the same or different entities, e.g., a travel provider or a third party that supports multiple travel providers. Engine 24 may be dedicated to system 12 or may support additional systems, or may be integrated into system 12. Furthermore, the functionality supported by engine 20 may be implemented without the use of a business rules-based methodology.

System 12 may be implemented in a number of manners consistent with the invention. Fig. 2, for example, illustrates an example apparatus 50 within which various steps from a revenue driven travel loyalty reward determination operation may be implemented in a manner consistent with the invention. For the purposes of the invention, computer 50 may represent practically any type of computer, computer system or other programmable electronic device. Moreover, computer 50 may be implemented using one or more networked computers, e.g., in a cluster or other distributed computing system, or may be implemented within a single computer or other programmable electronic device, e.g., a desktop computer, laptop computer, handheld computer, cell phone, set top box, etc.

Computer 50 typically includes a central processing unit 52 including at least one microprocessor coupled to a memory 54, which may represent the random access memory (RAM) devices comprising the main storage of computer 50, as well as any supplemental levels of memory, e.g., cache memories, non-volatile or backup memories (e.g., programmable or flash memories), read-only memories, etc. In addition, memory 54 may be considered to include memory storage physically located elsewhere in computer 50, e.g., any cache memory in a processor in CPU 52, as well as any storage capacity used as a virtual memory, e.g., as stored on a mass storage device 56 or on another computer coupled to computer 50. Computer 50 also typically receives a number of inputs and outputs for communicating information externally. For interface with a user or operator, computer 50 typically includes a user interface 58 incorporating one or more user input devices (e.g., a keyboard, a mouse, a trackball, a joystick, a touchpad, and/or a microphone, among others) and a display (e.g., a CRT monitor, an LCD display panel, and/or a speaker, among others). Otherwise, user input may be received via another computer or terminal.

For additional storage, computer 50 may also include one or more mass storage devices 56, e.g., a floppy or other removable disk drive, a hard disk drive, a direct access storage device (DASD), an optical drive (e.g., a CD drive, a DVD drive, etc.), and/or a tape drive, among others. Furthermore, computer 50 may include an interface 60 with one or more networks 62 (e.g., a LAN, a WAN, a wireless network, and/or the Internet, among others) to permit the communication of information with other computers and electronic devices, e.g., one or more client computers 64 and one or more servers 66 (e.g., implementing the various systems discussed above in connection with Fig. 1). It should be appreciated that computer 50 typically includes suitable analog and/or digital interfaces between CPU 52 and each of components 54, 56, 58 and 60 as is well known in the art. Other hardware environments are contemplated within the context of the invention.

Computer 50 operates under the control of an operating system 68 and executes or otherwise relies upon various computer software applications, components, programs, objects, modules, data structures, etc., e.g., an award calculator component 70. Moreover, various applications, components, programs, objects, modules, etc. may also execute on one or more processors in another computer coupled to computer 50 via network 62, e.g., in a distributed or client-server computing environment, whereby the processing required to implement the functions of a computer program may be allocated to multiple computers over a network.

In general, the routines executed to implement the embodiments of the invention, whether implemented as part of an operating system or a specific application, component, program, object, module or sequence of instructions, or even a subset thereof, will be referred to herein as "computer program code," or simply "program code." Program code typically comprises one or more instructions that are resident at various times in various memory and storage devices in a computer, and that, when read and executed by one or more processors in a computer, cause that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution.

Such computer readable media may include computer readable storage media and communication media. Computer readable storage media is non-transitory in nature, and may include volatile and non-volatile, and removable and non-removable media implemented in any method or technology for storage of information, such as computer-readable instructions, data structures, program modules or other data. Computer readable storage media may further include RAM, ROM, erasable programmable read-only memory (EPROM), electrically erasable programmable read-only memory (EEPROM), flash memory or other solid state memory technology, CD-ROM, digital versatile disks (DVD), or other optical storage, magnetic cassettes, magnetic tape, magnetic disk storage or other magnetic storage devices, or any other medium that can be used to store the desired information and which can be accessed by computer 50. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

Various program code described hereinafter may be identified based upon the application within which it is implemented in a specific embodiment of the invention. However, it should be appreciated that any particular program nomenclature that follows is used merely for convenience, and thus the invention should not be limited to use solely in any specific application identified and/or implied by such nomenclature. Furthermore, given the typically endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the invention is not limited to the specific organization and allocation of program functionality described herein.

Those skilled in the art will recognize that the example environment illustrated in Figs. 1 and 2 is not intended to limit the present invention. Indeed, those skilled in the art will recognize that other alternative hardware and/or software environments may be used without departing from the scope of the invention.

Revenue Driven Travel Loyalty Rewards

Conventionally, many airlines manage miles redemption through redemption availability and classes. The redemption availability is usually low and no inventory and/or revenue management logic is utilized to calculate availability or fares. Redemption fares are generally either calculated from redemption published fares or directly by airline loyalty systems without interaction with the airline inventory system and the revenue management system. In other cases, redemption availability and fares may be based on commercial individual classes. In these cases, revenue management considerations such as the expected load factor or the customer value to the airline are not considered.

In many cases, airlines handle loyalty passengers independently from revenue management, such that loyalty seats that can be redeemed are not seen as revenue and their amount is limited. In other cases, seats are seen as revenue because the redemption is based on commercial fares, but the loyalty customer value is not taken into account.

Embodiments consistent with the invention, on the other hand, utilize a revenue driven methodology to interactively compute redemption net fares and availability using availability and revenue data, e.g., as may be accessed from an inventory system and a revenue management system. Some embodiments additionally provide the ability to adapt availability and net fares depending on a customer's value linked to an airline policy. Among the benefits to a travel provider, such embodiments allow for increasing the amount of redemption seats that can be sold by still considering the revenue management recommendations, potentially leading to increased revenue. In addition, such embodiments provide travel providers with a method and a system that allows them to reduce their miles liabilities while still offering more seats to frequent flyers, thereby offering a competitive advantage over other competitors.

In some embodiments, by taking into account revenue management concepts along with loyalty customer value, greater availability and lower customized award net fares may be offered on flights with lower expected load factor, e.g., as are common for many travelers. Similarly, on flights with higher demand, redemption may still be still possible with a customized award net fare that is dynamically computed to reflect the demand, thereby addressing the needs of travelers who still wish to use their miles during the peak season, and who are willing to pay more for that ability.

Embodiments consistent with the invention, for example, may determine a travel loyalty award, such as a flight, by generating an award availability based on inventory data, and optionally using business rules that take into account request characteristics as well as revenue management data, and by generating a customized award net fare in the currency of the airline by taking into account one or more of request characteristics, flight characteristics, revenue management data, and customer value. Customized award net fares may be computed in currency, e.g., based on yields corresponding to individual classes, on bid price vectors, or in other manners utilizing revenue management principles.

In addition, currency to miles conversion rules may be received in input and used to convert net fares to miles, points or other forms of value implemented in a travel loyalty program. If no rules have been provided or are used, a customized award net fare may be returned in currency and converted later.

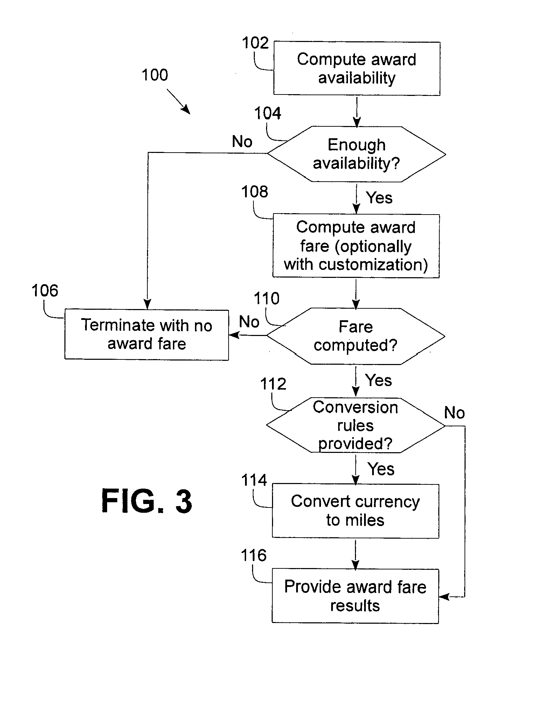

Fig. 3, for example, illustrates a process 100 utilizing an example implementation of a revenue driven travel loyalty reward determination operation consistent with the invention. Process 100 may be initiated in response to a request initiated by a reservation system, and may begin by computing award availability, , e.g., by accessing inventory data from an inventory system, in block 102. Block 104 determines whether enough availability exists, and if not, control passes to block 106 to terminate process 100 with no award fare being offered in response to the request. Otherwise, block 104 passes control to block 108 to compute a fare for the award, e.g., by accessing revenue management data from a revenue management system, and optionally, including customizations based upon customer loyalty concerns. If the fare cannot be computed, block 110 passes control to block 106 to terminate process 100, otherwise block 110 passes control to block 112 to determine whether any conversion rules have been provided or are otherwise accessible for use in converting between currency and miles (or other travel loyalty program values). If so, block 112 passes control to block 114 to convert the computed fare, which is generally determined as a currency, to miles or another suitable value, and then to block 116 to return the award fare results as a response to the initial request. If no rules are available, however, block 112 passes control directly to block 116, bypassing block 112. Process 100 is then complete.

Additional details regarding an example implementation of process 100 are provided below.

Request/Response Contents

An input request to an award calculator consistent with the invention may include various types of data, including, for example, point of commencement (i.e., departure location), an originator of the request (e.g., a city/country code corresponding to the originator, and potentially additional information about the system, organization or sales channel from which the request is initiated), segments to be priced (including the requested cabin) and/or number of passengers to be priced. In addition, various customer relationship data may be provided with a request or otherwise made available to the award calculator component, e.g., customer tier, customer value, customer churn risk level, customer average ancillary revenue, customer disruption level and/or customer miles breakage ratio.

Customer tier generally refers to a level in a loyalty program (e.g., silver, gold, platinum), while customer value is generally finer grained than customer tier and generally refers to the manner in which a customer uses the program and how "valuable" the customer is to the airline, e.g., based on how frequently the customer purchases flights, the costs of such flights, and how recently those flights were purchased. In some embodiments, customer value may be a continuous metric, computed for example with Recency-Frequency-Monetary (RFM) or Customer Lifetime Value (CLV) algorithms, or in other manners that will be appreciated to one of ordinary skill in the art having the benefit of the instant disclosure.

Customer churn risk level, which may also be referred to as customer attrition risk, relates to the risk that a customer will choose to go to the competition, and may be determined based on analysis of the customer's activity on the airline and in other airline's programs. Customer average ancillary revenue refers to non-ticket revenues calculated over the customer purchase history, while customer disruption level refers to the relative amount of disruptions to which the customer has been subjected (e.g., due to late or canceled flights) and is based on the disruption occurrences severity with time attenuation effects. Customer miles breakage ratio refers to customer miles that could be lost due to expiration, and allows for giving a bonus to customers having expired miles, to show the program value, and thus reinforce customer loyalty.

In some embodiments, for example, the customer relationship data discussed above may be used to adjust fares to provide more attractive offers to customers who are perceived as being valuable to an airline, but who may not feel as great of a loyalty to the airline, e.g., due to poor traveling experiences, relationships with other airlines, etc. Consequently, such data may be used to reinforce customer loyalty and potentially strengthen the bond between the customer and the airline.

Once an award is calculated based upon the input request, a response is generated and returned to the reservation system, as discussed above. A response, for example, may include a customized award net fare per traveler and per request in the currency of the airline, as well as optional data such as an award availability for the request, a customized award net fare per traveler and per request in miles, a customized award net fare per traveler and by segment in the currency of the airline and/or a customized award net fare per traveler and by segment in miles.

Other data may be provided in a request and/or response, as will be apparent to one of ordinary skill in the art having the benefit of the instant disclosure.

Computing Award Availability

In the illustrated embodiment, award availability may be determined as follows. First, award availability by segment may be computed based on inventory system data, e.g., segment capacity for the requested cabin, segment availability for the requested cabin, and number of already existing award bookings on the requested segment and in the requested cabin. In addition, one or more business rules may be defined and applied, e.g., to control a maximum award availability proportion for the requested segment and cabin.

For example, in one embodiment, when detecting what rule should be applied for a segment, the award calculator system may compare request, flight and revenue data with rules data as presented in Table I:

Table I

| Award calculator data | Rule data | Comparison |
|---|---|---|
| Segment departure date | Start date<br>End date | Check if departure date is between start and end dates, inclusive. |
| Board point<br><br>Off point | Departure market<br>Arrival market | Check if board point belongs to departure market and off point belongs to arrival market. |
| Aircraft (travel vehicle) type for segment (in case of multi-leg segment, if the aircraft changes then the aircraft type may not be set). Leg structure and associated aircraft types may be retrieved from inventory system. | Aircraft (travel vehicle) type | Check if the aircraft type matches rule. In case the aircraft type in rule has not been entered, all aircraft types match, including null value. |
| Segment cabin | Cabin | Check if cabin code from award calculator matches cabin code from rule. |
| Segment cabin load factor (may be retrieved from inventory system). | Minimum load factor<br>Maximum load factor | Check if segment cabin load factor is between minimum and maximum load factors. |
| Segment cabin expected load factor. (may be retrieved from revenue management system). | Minimum expected load factor<br>Maximum expected load factor | Check if segment cabin expected load factor is between minimum and maximum expected load factors. |

If a matching rule is found then a maximum award proportion value associated with that business rule may be retrieved. In case no rule is found the proportion may be considered to be 100%. Then, once all data is retrieved and the maximum award availability proportion is determined, award availability by segment may be computed according to the following formula:

$$\text{availability count} = MIN(MAX(SegmentCabinCapacity*MaxAwardProportion - SegmentCabinAwardBookings; 0); SegmentCabinAvailability);$$

where SegmentCabinCapacity is capacity of the cabin in the flight segment, MaxAwardProportion is a maximum proportion of awards that may be booked in the cabin in the flight segment, SegmentCabinAwardBookings is a number of booked awards in the cabin in the flight segment, and SegmentCabinAvailability is a current availability in the cabin in the flight segment.

As an example, consider a segment date with a capacity in an economy cabin of 200 seats. Assume there are already 5 award bookings on the segment date and the remaining availability is 50 seats. In case no matching maximum award availability proportion rule can be found, the proportion is considered to be 100%. The award availability for the segment would then be MIN(MAX(200 seats*100% - 5 seats; 0); 50 seats) = 50 seats. In another case, if a matching rule has a maximum award availability proportion of 20%, the award availability for the segment would be MIN(MAX(200 seats*20% - 5 seats; 0); 50 seats) = 35 seats.

Second, once segment cabin availability has been computed for all of the segments of the request, The award availability for the entire request may be computed, e.g., based upon the following formula:

$$AwardAvailabilityRequest = MIN(AwardAvailabilitySegmentOfRequest)$$

Once the award availability has been computed, the award calculator system checks if the availability is sufficient for the requested number of passengers. In case the availability is insufficient, the process is stopped with no customized award net fare computed, otherwise, the process continues with computing a customized award net fare computation, as noted above in connection with Fig. 3.

As an example, consider an award including two segments, segment A-B and segment B-C. If the award availability on segment A-B is 10 seats, and the award availability on segment B-C is 20 seats, the award availability returned for the requested trip would be the minimum of these values, or 10 seats.

Computing Award Fare

In the illustrated embodiment, award fare may be determined as follows. First, award fare by segment may be computed. Second, the segment fares may be aggregated at the request level.

Award fare by segment may be computed as a custom award net fare. In one embodiment, a custom award net fare is determined by determining a displacement cost and, calculating an adjusted award net fare from the displacement cost, and thereafter calculating a customized award net fare from the adjusted award net fare.

In addition to the aforementioned data associated with the request, additional data may also be used in calculating an award net fare computation. For example, flight characteristics, e.g., segment cabin capacity, cabin booking classes with availability and/or segment cabin load factor, may be used. In addition, revenue management data, e.g., segment cabin expected load factor, segment cabin forecasted empty seats, carrying cost, segment booking class yields and/or leg cabin bid price vectors may be used.

In order to ensure that award net fares take into account revenue management policies of an airline, a displacement cost principle may be used: an award traveler, by being accepted, can potentially displace individual and/or group travelers booking under standard bookings such as individual or group bookings. Therefore, when computing the displacement cost for an award traveler, the revenue that could be expected from standard bookings may be taken into account, noting additionally that an award traveler does not displace individual or group travelers in case forecasted empty seats are used (as the forecasted empty seats are forecasted to remain empty at departure).

In order to compute the award net fare, displacement cost may be determined based on bid price vectors, yields associated with segments and booking classes, or in other manners that will be appreciated by one of ordinary skill in the art having the benefit of the instant disclosure. For example, to determine displacement cost based on bid price vectors, the displacement cost over a segment and for the number of requested award passengers may be computed as the sum of the displacement costs for each leg cabin included in the segment. The displacement cost over a leg cabin for the number of the requested award passengers may be considered as the sum of the bid price values starting from the current seat index and up to the number of award passengers to price.

An example for two award passengers to price is provided in Table II:

**Table II**

| Seat index A-B | Bid price A-B | Seat index B-C | Bid price B-C |
|---|---|---|---|
| 1 | 500 | 664 | 400 |
| 2 | 350 | 347 | 300 |
| 3 | 300 | 230 | 210 |
| 4 | 190 | 152 | 165 |
| 5 | 130 | 103 | 110 |
| 6 | 100 | 74 | 80 |
| 7 | 90 | 54 | 60 |
| 8 | 70 | 36 | 39 |
| 9 | 60 | 23 | 26 |
| 10 | 45 | 13 | **14** |
| 11 | 34 | (current seat index) 7 | **6** |
| 12 | 25 | | |
| 13 | **20** | | |
| (current seat index) 14 | **0** | | |
| **Displacement cost:** | **20** | | **20** |

In this example, the displacement cost for two passengers on leg A-B is equal to 0 (passenger 1) + 20 (passenger 2) currency units while on leg B-C it is equal to 6 (passenger 1) + 14 (passenger 2) currency units. The displacement cost over the segment A-C and for all the award passengers is then equal to the sum between the displacement cost over A-B and B-C which is equal to 40 currency units.

Of note, in case there are bid price vectors missing, the pricing process may be stopped and an error message may be sent back to the calling system. Also, once a displacement cost has been calculated for the requested number of passengers, the displacement cost per passenger may be determined. In the illustrated embodiment, this cost is pro-rated between passengers, so in this example, the displacement cost per passenger would be equal to 40/2, or 20 currency units.

As an alternative to determining displacement cost based on bid price vectors, yields and forecasted empty seats may be used. When using yields, for each segment, displacement cost is computed by taking into account the forecasted empty seats and/or booking classes with their associated availability and yields. In some embodiments, special booking classes as promotion booking classes can be excluded from the displacement process.

Displacement generally begins by displacing in the forecasted empty seats and then displacing in the booking classes ordered by increasing yield value until all award passengers to be priced have been displaced. In case an award passenger uses the forecasted empty seats, the carrying cost is used in order to cover the costs induced by the servicing of the traveler. As the forecasts do not expect to obtain revenue from selling this seat, loyalty travelers actually do not displace individuals. In case an award passenger has displaced an individual in a booking class, its displacement cost is considered to be the value of the yield.

As an example, Table III illustrates an example of segment displacement cost calculation based on yields for 3 redemption passengers:

**Table III**

| Booking class | Yield | Availability | Displaced |
|---|---|---|---|
| M | 600 | 100 | |
| B | 452 | 50 | |
| O | 400 | 30 | |
| G | 220 | 10 | 1 |
| X | 210 | 1 | 1 |
| Z | 156 | Promotional booking class not used for the displacement 1 | Not used |
| Forecasted empty seats | Carrying cost: 50 | 1 | 1 |

As noted above, travelers are first displaced to empty seats, then to the lowest yield booking classes, and potentially excluding promotional booking classes. Thus, in this example, the segment displacement cost for the 3 award passengers is equal to 50 (carrying cost) + 210 (booking class X) + 220 (booking class G), or 480 currency units.

As with bid price vectors, if displacement cost cannot be computed due to missing yields, the pricing process may be stopped and an error message may be sent back to the calling system. Also as noted above, once the displacement cost algorithm has been completed for all the requested number of passengers, the displacement cost per passenger may be determined, e.g., on a pro-rata fashion. Thus, for this example, the displacement cost per passenger would be equal to 480/3, or 160 currency units.

Regardless of the method used to calculate displacement cost, once the displacement cost per segment and per passenger has been computed, a segment award net fare may be calculated using adjustment rules to generate an adjusted award net fare.

For example, in one embodiment, when detecting what rule should be applied for a segment, the award calculator system may compare various data with rules data as presented in Table IV to retrieve an adjustment factor for the rule:

**Table IV**

| Award calculator data | Rule data | Comparison |
|---|---|---|
| Segment departure date | Start date End date | Check if departure date is between start and end dates, inclusive. |

(continued)

| Award calculator data | Rule data | Comparison |
|---|---|---|
| Board point<br><br>Off point | Departure market<br>Arrival market | Check if board point belongs to departure market and off point belongs to arrival market. |
| Segment cabin code | Cabin code | Check if cabin code from award calculator matches cabin code from rule. |
| Point of commencement | Point of commencement | Check if request departure point geographical location belongs to rule point of commencement. |
| Request originator | Request originator point of sale | Check if request point of sale, including geographical and sales channel info, belongs to rule point of sale. |
| Segment cabin load factor | Minimum load factor<br>Maximum load factor | Check if segment cabin load factor is between minimum/maximum load factors. |
| Segment cabin expected load factor | Minimum expected load factor<br>Maximum expected load factor | Check if segment cabin expected load factor is between minimum/maximum expected load factors. |

If a matching rule is found then the adjustment factor associated with that business rule may be retrieved. In case no rule is found the adjustment factor may be considered to be 100%. Thus, for every segment and cabin an adjustment factor is retrieved based on any applicable business rules.

Then, in the illustrated embodiment, an adjusted award net fare for a given segment may be computed as:

$$SegmentCabinAwardNetFare = SegmentCabinDisplacementCost * AdjustmentFactor.$$

Once the adjusted award net fare for each segment has been calculated, a request award net fare per passenger may then be computed as the sum of the segment adjusted award net fares.

In some embodiments, it may be desirable to apply a minimum revenue constraint to adjusted award net fares in order to ensure that pricing has been performed in a manner that respects minimum revenue constraints. In order to do so, a business rule may be used at the segment level, defining for each segment a minimum acceptable revenue. When deciding what rule should be applied, the system may compare request, flight and revenue data with rules data as presented in Table V:

**Table V**

| Award calculator data | Rule data | Comparison |
|---|---|---|
| Segment departure date | Start date<br>End date | Check if departure date is between start and end dates, inclusive. |
| Board point<br>Off point | Departure market<br>Arrival market | Check if board point belongs to departure market and off point belongs to arrival market. |
| Segment cabin code | Cabin code | Check if cabin code from award calculator matches cabin code from rule. |

If a matching rule is found then a minimum acceptable revenue associated with that business rule may be retrieved. In case no rule is found the minimum acceptable revenue may be considered to be 0. The minimum acceptable revenue on the entire request may then be calculated as the sum of the minimum acceptable revenues on the associated segments.

Thus, as an example, consider the following segments: segment A-B, with a minimum acceptable revenue of 100, segment B-C, with no rule, and thus a minimum acceptable revenue of 0, and segment C-D, with a minimum acceptable revenue of 50. Summing these three minimums together would result in a minimum acceptable revenue for a request including all three segments would be 150 currency units.

In the illustrated embodiment, the request minimum acceptable revenue may be compared to the adjusted award net fare per passenger. If the adjusted award net fare is lower than the minimum acceptable value then the adjusted award net fares for all the segments are overridden by the minimum acceptable revenue values by segment.

Customer Loyalty Award Fare Customization

In some embodiments of the invention, additional customizations may be made to an award net fare, or to an adjusted award net fare, whether on a segment-by-segment basis or on the basis of an entire request. In particular, it will be appreciated that, from the perspective of the award net fare or adjusted award net fare, the fare reflects pricing primarily from a revenue management point of view, and in some embodiments, it may also be desirable to customize an award fare to take into account a customer loyalty point of view.

Customization, in this regard, may be used to personalize an award net fare based on customer knowledge and to desirably enhance customer loyalty. The customer knowledge may be provided by a customer management system, e.g., customer management system 30 of Fig. 1, which as noted above, may include one or more components such as loyalty, frequent flyer program management, CRM, CEM or customer data warehouse components.

Rules may be defined and applied on an award net fare or adjusted award net fare (and optionally configurable per cabin and request date), e.g., as shown in Table VI:

Table VI

| Award calculator data | Rule data | Comparison |
|---|---|---|
| Customer tier | Customer tier | Check if customer tier corresponds to rule customer tier. |
| Customer value | Customer min value Customer max value | Check if customer value is between min and max values. |
| Customer churn risk level | Min risk level Max risk level | Check if customer churn risk is between min and max values. |
| Customer average ancillary revenues | Min Ancillary Revenue Max Ancillary Revenue | Check if customer ancillary revenue is between min and max values. |
| Customer disruption level | Min disruption level Max disruption level | Check if customer disruption level is between min and max values. |
| Customer miles breakage ratio | Min ratio level Max ratio level | Check if miles breakage ratio is between min and max values. |
| Request date | Start date End date | Check if request is between start and end dates, inclusive. |
| Requested cabin code | Cabin code | Check if cabin code from award calculator matches cabin code from rule. |

Each rule may be associated with an adjustment factor that may be used to adjust the fare, and if no matching rule can be found, the adjustment factor is considered to be 100%. Thus, a customized award net fare for a given segment may be calculated as:

$$CustomizedAwardNetFare = AwardNetFare * AdjustmentFactor.$$

Accordingly, loyalty data, e.g., as provided by a customer management system or otherwise, may be used to customize a fare calculation to address travel loyalty program goals or concerns.

Convert Currency To Miles

As noted above in connection with Fig. 3, in some embodiments conversion rules may be provided to calculate a customized award net fare in miles from currency (i.e., to convert between a currency-based value and a points-based value). In some embodiments, for example, a conversion rule may be based on an exchange rate that may be applied on the customized award net fare calculated in the airline currency and/or may be based on a correction function that may be applied at either the segment level or the request level.

As one example, both an exchange rate and a correction function may be used, with the correction function may defining mile/point/value levels or ranges to which an award net fare in miles should be adjusted. The function may have as input a net fare interval in miles and a mile level to convert to. One example conversion function is shown in Table VII:

Table VII

| Interval (miles) | New value (miles) |
| --- | --- |
| [0,5000] | 5000 |
| [5001-10000] | 10 000 |
| [10001-15000] | 15 000 |
| [15001-open] | 30 000 |

Thus, for example, if an exchange rate specifies that each currency unit equals 50 miles, an award net fare of 150 currency units would be converted to 7500 equivalent miles, which is in the second interval of the correction function of Table VII, resulting in a net award fare of 10,000 miles.

Providing award fare results

In some embodiments, once processing is complete, a customized award net fare per passenger, as well as a customized award net fare per request, may be returned in the currency of the airline. Optionally, one or more of an award availability for the request, a customized net fare per passenger and per request in miles/points/value, a customized net fare per passenger and by segment in the currency of the airline and/or a customized net fare per passenger and by segment in miles may be returned to the reservation system in response to the initial request.

Additionally information that may be returned in response to the request will be apparent to one of ordinary skill in the art having the benefit of the instant disclosure.

Conclusion

Embodiments of the invention may provide a number of benefits. In particular, award pricing logic may be combined with revenue management logic such that a revenue management policy may be directly applied to award pricing and availability. By doing so, an airline's revenue management policies may influence the award pricing directly by ensuring that a level of revenue is ensured for the airline. In addition, a loyalty system may influence revenue management award pricing by personalizing the price in miles for each customer, which may permit an airline to achieve an optimal balance between maximizing revenue on a flight (revenue management objective) and revenue over a customer lifetime (loyalty system objective). In addition, expected unused capacity, e.g., forecasted empty seats usage, may be used to increase the offer for award passengers at a low net fare, which is beneficial to the extent that it allows filling seats that are forecasted to be empty while at the same time providing advantageous net fares to award customers. Further, by increasing award offers, airlines may be able to reduce their miles liabilities more quickly, and by increasing award offers and providing lower net fares when defaulting on forecasted empty seats, airlines may be able to attract new customers, retain more customers, and therefore secure more revenue.

Some embodiments may implement award availability calculation based on inventory and/or revenue management data, enabling travel providers to utilize a dedicated computation for award availability based on current flight counters and on an expected load factor computed by a revenue management system. As such, availability is not limited to a redemption booking class, yet is still controllable depending on an award availability proportion that depends on current and expected bookings and capacity of requested segments and cabins.

Some embodiments may implement customized award dynamic net fare computation to provide dynamic pricing capabilities that adapt a customized award net fare to revenue management recommendations. Moreover, a customized award net fare may be a continuous fine level value that better reflects the characteristics of a requested trip (rather than having the same fare levels for an entire region as it is often the case in conventional designs). With customized award dynamic net fare computation, net fares may be offered in a manner that is optimized for loyalty customers, while remaining compliant with airline revenue management policies, and in many cases providing award availability up to the capacity of a flight cabin while still maintaining expected revenue levels.

Additional embodiments may implement a currency to miles conversion mechanism, accompanied by an adjustment function that computes discrete customized award net fares. This may be of benefit to travel providers that prefer the use of discrete customized award net fares.

It will be appreciated that some of the features of the example embodiments of this invention may be used without the corresponding use of other features. In addition, various additional modifications may be made without departing from the spirit and scope of the invention. Therefore, the invention lies in the claims hereinafter appended.

## Claims

1. A method for determining a travel loyalty award, comprising:

   in response to receiving a request for a travel loyalty award including at least one travel inventory item, accessing inventory and revenue data for the at least one travel inventory item;
   dynamically determining availability of the travel loyalty award based at least in part on the accessed inventory data; and
   dynamically generating a fare for the travel loyalty award based at least in part on the accessed revenue data.

2. The method of claim 1, wherein the travel inventory item is associated with a flight segment.

3. The method of claim 1 or 2, wherein:

   accessing the inventory data includes accessing inventory data for commercial travel inventory items from an inventory system (20);
   accessing the revenue data includes accessing revenue data for commercial travel inventory items from a revenue management system (22).

4. The method of any of claims 1-3, wherein dynamically determining availability for the travel loyalty award includes determining availability in at least one product type associated with the travel inventory item, and wherein determining availability for the travel loyalty award includes determining availability based upon availability for the travel inventory item, capacity for the travel inventory item, and existing bookings for the travel inventory item.

5. The method of claim 4, wherein dynamically determining availability for the travel loyalty award includes determining availability based upon a maximum proportion of awards that may be booked in at least one cabin associated with the travel inventory item and wherein dynamically determining availability for the travel loyalty award further includes applying at least one business rule, wherein the at least one business rule is based on at least one of departure date, departure market, arrival market, travel vehicle type, travel vehicle cabin, current load factor, or expected load factor.

6. The method of any of the preceding claims, wherein dynamically determining availability for the travel loyalty award includes determining an availability count for at least one travel inventory item, wherein dynamically determining availability for the travel loyalty award includes determining an award availability as a minimum of determined availability counts for a plurality of travel inventory items associated with the travel loyalty award, wherein the travel inventory item is associated with a flight segment and cabin, and wherein determining the availability count includes determining the availability count as follows:

$$\text{availability count} = MIN(MAX(SegmentCabinCapacity * MaxAwardProportion - SegmentCabinAwardBookings; 0); SegmentCabinAvailability);$$

where SegmentCabinCapacity is capacity of the cabin in the flight segment, MaxAwardProportion is a maximum proportion of awards that may be booked in the cabin in the flight segment, SegmentCabinAwardBookings is a number of booked awards in the cabin in the flight segment, and SegmentCabinAvailability is a current availability in the cabin in the flight segment.

7. The method of any of the preceding claims, wherein dynamically generating the fare includes dynamically generating the fare based at least in part on one or both of an expected unused capacity at a time of departure for a travel vehicle associated with the travel loyalty award or loyalty data for a customer associated with the travel loyalty award.

8. The method of any of the preceding claims, wherein dynamically generating the fare includes determining from the revenue data a displacement cost for the travel inventory item, wherein the displacement cost is associated with an opportunity cost for allocating the travel inventory item to the travel loyalty award instead of to a standard booking.

9. The method of claim 8, wherein dynamically generating the fare further includes adjusting the displacement cost by applying at least one business rule, wherein the at least one business rule is based on at least one of departure date, departure market, arrival market, travel vehicle cabin, point of commencement, point of sale, current load factor, or expected load factor.

10. The method of claim 8, wherein dynamically generating the fare further includes applying a minimum revenue constraint based upon at least one business rule, wherein the at least one business rule is based on at least one of departure date, departure market, arrival market or travel vehicle cabin, wherein dynamically generating the fare further includes customizing the fare based on loyalty data associated with a customer associated with the travel loyalty reward.

11. The method of claim 10, wherein customizing the fare includes applying at least one business rule, wherein the at least one business rule is based on at least one of customer tier, customer value, customer churn risk, customer ancillary revenues, customer disruption, customer miles breakage, request date or travel vehicle cabin, and wherein the at least one business rule is based on a customer value determined using a Recency-Frequency-Monetary (RFM) or Customer Lifetime Value (CLV) algorithm.

12. The method of any of the preceding claims, wherein dynamically generating the fare includes converting the fare from a currency-based value to a points-based value.

13. The method of any of the preceding claims, further comprising accessing customer loyalty data in response to receiving the request for the travel loyalty award, wherein dynamically generating the fare for the travel loyalty award is further based at least in part on the customer loyalty data.

14. An apparatus (50), comprising:

    at least one processor (52); and
    program code (70) configured upon execution by the at least one processor to perform the method of any of claims 1-13.

15. A program product, comprising:

    a computer readable medium (54); and
    program code (70) stored on the computer readable medium and configured upon execution by at least one processor (52) to perform the method of any of claims 1-13.

# FIG. 1

10

**Tax Computation System 26**

**End User System 18**

**Reservation system 16**

**Award computation request/ response 14**

**Miles Conversion System 28**

**Customer Management System 30**

**Business Rules Engine 24**

**Inventory System 20**

**Award Calculator 12**

**Revenue Management System 22**

**Apparatus 50**

**Memory 54**

**Award Calculator Component 70**

**Operating System 68**

**Client 64**

**Network 62**

**Server 66**

**Network I/F 60**

**CPU 52**

**User I/F 58**

**Mass Storage 56**

# FIG. 2

**102** — Compute award availability

**100**

**104** — Enough availability?
No →

Yes ↓

**108** — Compute award fare (optionally with customization)

**106** — Terminate with no award fare

**110** — Fare computed?
No →

Yes ↓

**112** — Conversion rules provided?
No →

Yes ↓

**114** — Convert currency to miles

**116** — Provide award fare results

# FIG. 3

Europäisches
Patentamt

European
Patent Office

Office européen
des brevets

# EUROPEAN SEARCH REPORT

Application Number

EP 13 29 0328

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | "STATEMENT IN ACCORDANCE WITH THE NOTICE FROM THE EUROPEAN PATENT OFFICE DATED 1 OCTOBER 2007 CONCERNING BUSINESS METHODS - EPC / ERKLAERUNG GEMAESS DER MITTEILUNG DES EUROPAEISCHEN PATENTAMTS VOM 1.OKTOBER 2007 UEBER GESCHAEFTSMETHODEN - EPU / DECLARATION CONFORMEMENT AU COMMUNIQUE DE L'OFFICE EUROP", 20071101, 1 November 2007 (2007-11-01), XP007905525, * The claimed subject-matter, with due regard to the description and drawings in accordance with Art. 92 EPC, relates to processes comprised in the list of subject-matter and activities excluded from patentability under Art. 52(2) and (3) EPC. The information technology employed as an enabler for carrying out said processes is conventional. Its use for carrying out non-technical processes forms part of common general knowledge and it was widely available to everyone at the date of filing of the present application. No documentary evidence is therefore considered necessary. (See Official Journal EPO 11/2007, pages 592ff and 594ff). * ----- | 1-15 | INV. G06Q30/02 |

TECHNICAL FIELDS
SEARCHED (IPC)

G06Q

The present search report has been drawn up for all claims

| Place of search | Date of completion of the search | Examiner |
|---|---|---|
| The Hague | 18 March 2014 | Fiorenzo Catalano, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................

& : member of the same patent family, corresponding document

EPO FORM 1503 03.82 (P04C01)